# EUROPÄISCHE PATENTSCHRIFT

(11) **EP 0 602 385 B1**
(45) Veröffentlichungstag und Bekanntmachung des Hinweises auf die Patenterteilung: **28.05.1997**
(21) Anmeldenummer: 93118194.5
(22) Anmeldetag: 10.11.1993
(51) Int. Cl.: G01D 11/28, B60Q 3/04

(54) **Beleuchtbares Zeigerinstrument**
Illuminatable pointer instrument
Instrument à aiguille éclairable

(30) Priorität: 18.12.1992 DE 4242913
(43) Veröffentlichungstag der Anmeldung: 22.06.1994
(73) Patentinhaber: Moto Meter GmbH, D-71229 Leonberg (DE)
(72) Erfinder: Lang, Klaus, D-72663 Grossbettlingen (DE); Oreans, Derk, Dipl.-Ing., D-75173 Pforzheim (DE); Mann, Hans-Peter, D-71287 Weissach (DE)
(74) Vertreter: Voss, Klaus, Dipl.-Ing.

(56) Entgegenhaltungen:
- DE-A- 2 913 139
- DE-A- 3 215 184
- GB-A- 2 237 385
- US-A- 4 777 480

## Beschreibung

### Stand der Technik

Die Erfindung geht aus von einem beleuchtbaren Zeigerinstrument, insbesondere zum Einsatz in Kraftfahrzeugen, nach der Gattung des Hauptanspruchs. Es ist schon ein beleuchtbares Zeigerinstrument bekannt (DE-OS 29 13 139), bei dem als Skalenträger eine lichtleitende Platte dient, die von ihrer Außenumfangsfläche her mittels einer ersten Lichtquelle beleuchtbar ist und in deren Zentrum sich eine Durchgangsbohrung zur reibungslosen Durchführung einer Meßwerkswelle befindet. Während das Meßwerk des Zeigerinstrumentes dabei an der vom Betrachter abgewendeten Unterseite der lichtleitenden Platte angeordnet ist, ist auf der der eine Skala tragenden Oberseite der lichtleitenden Platte ein ebenfalls aus lichtleitendem Material bestehender, beleuchtbarer Zeiger vorgesehen. Dieser Zeiger ist mit seiner Nabe auf dem freien Endabschnitt der Meßwerkswelle festgelegt und dreht sich entsprechend dem vom Meßwerk zugeführten Meßsignal auf den jeweiligen Wert/Bereich bzw. auf ein vorbestimmtes Symbol. Zur Beleuchtung des Zeigers, insbesondere zur Beleuchtung der Zeigerfahne, ist unter Zwischenschaltung einer lichtreflektierenden Beschichtung auf der Unterseite der lichtleitenden Platte ein lichtleitendes Element von rippenartiger Form befestigt.

Dieses Element hat sein eines Ende in der Nähe der Außenumfangsfläche der lichtleitenden Platte und deckt mit seinem anderen Endabschnitt den Zentralbereich um die Durchgangsbohrung der lichtleitenden Platte ab, läßt dabei jedoch über eine zur Durchgangsbohrung koaxial verlaufende Aussparung die Meßwerkswelle reibungsfrei hindurch. Der den Zentralbereich der lichtleitenden Platte bedeckende Endabschnitt des genannten lichtleitenden Elementes besitzt eine abgeschrägte Außenfläche, welche unter einem Winkel von 45° zur Unterseite der lichtleitenden Platte hin geneigt ist. Oberhalb dieser abgeschrägten Außenfläche des lichtleitenden Elementes gelegene Bereiche der lichtleitenden Platte sind von der reflektierenden Beschichtung und von der Skala freigehalten. Diese abgeschrägte Außenfläche dient als lichtreflektierende Fläche und lenkt von einer zweiten, in der Nähe des an der Außenumfangsfläche befindlichen Elementendes angeordneten Lichtquelle kommendes und dann durch die lichtleitende Platte flutendes Licht in Richtung auf die Lichteintrittsfläche an der Unterseite der Zeigernabe. Dieses in die Zeigernabe eintretende Licht wird anschließend mittels einer dem Betrachter zugewendeten, reflektierenden Schräge an der Zeigernabe in Richtung der Zeigerfahne abgelenkt, so daß letztere infolge des Lichtes für den Betrachter gut sichtbar ist. Diese Art der Zeigerbeleuchtung bedingt jedoch wegen des der Zeigerbeleuchtung dienenden, lichtleitenden Elementes eine relativ lange Meßwerkswelle, an deren freien Endabschnitt der Zeiger befestigt ist. Ist ein solches Zeigerinstrument in einem Kraftfahrzeug eingebaut, so wirken beim Beschleunigen bwz. beim Abbremsen des Kraftfahrzeuges durch den Zeiger verursachte Biegemomente auf die sehr dünne Meßwerkswelle; infolge dieser Biegemomente kann die Meßwerkswelle verbogen werden und damit zu Fehlern bei der Anzeige von Meßwerten, Meßbereichen bzw. Symbolen Anlaß geben.

Aus der GB 2 237 385 A ist ein Zeigerinstrument bekannt, bei welchem mehrere Rippen sternförmig angeordnet sind, wobei die Rippen sich in ihrem Querschnitt nicht verändern. Zur Beleuchtung wird in den axialen Bereich der sternförmigen Rippen Licht eingeleitet, das dann über eine Reflexionsfläche in den Zeiger eingekoppelt wird.

### Vorteile der Erfindung

Das erfindungsgemäße beleuchtbare Zeigerinstrument mit den kennzeichnenden Merkmalen des Hauptanspruchs hat demgegenüber den Vorteil, daß die Meßwerkswelle kürzer ausgebildet werden kann als bei dem Zeigerinstrument gemäß dem vorstehend aufgeführten Stand der Technik und daß dadurch die Gefahr eines Verbiegens der Meßwerkswelle mit der Folge von Fehlanzeigen wesentlich verringert wird. Durch die in den abhängigen Ansprüchen aufgeführten Maßnahmen sind vorteilhafte Weiterbildungen und Verbesserungen des im Hauptanspruch angegebenen Zeigerinstrumentes möglich. Besonders vorteilhaft ist es, wenn anstelle eines einzigen lichtleitenden, der Zeigerbeleuchtung dienenden rippenartigen Elements mehrere schmalere derartige Elemente Anwendung finden, die - durch Nuten voneinander getrennt, im wesentlichen parallel zueinander verlaufen.

### Zeichnung

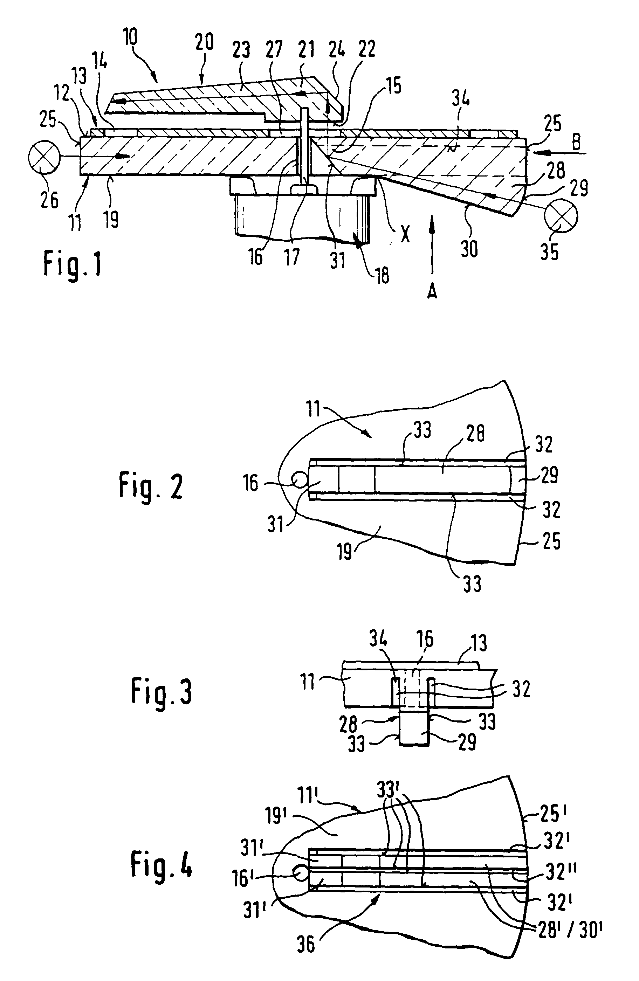

Ausführungsbeispiele der Erfindung sind in der Zeichnung dargestellt und in der nachfolgenden Beschreibung näher erläutert. Es zeigen Figur 1 einen Vertikalschnitt durch die funktionell wichtigen Bauteile einer ersten Ausführungsform eines vergrößert dargestellten Zeigerinstrumentes, Figur 2 einen Ausschnitt aus der lichtleitenden, als Skalenträger dienenden Platte des Zeigerinstrumentes gemäß Figur 1 in Unteransicht (s. Pfeil A in Figur 1), Figur 3 einen Ausschnitt aus der lichtleitenden, die Skala tragenden Platte gemäß Figur 1 in Seitenansicht (s. Pfeil B in Figur 1) und Figur 4 eine zweite Ausführungsform einer in Unteransicht gezeigten lichtleitenden Platte, die mit zwei schmalen lichtleitenden, parallel zueinander verlaufenden Elementen zur Zeigerbeleuchtung versehen ist.

### Beschreibung der Ausführungsbeispiele

In der Figur 1 sind die funktionswichtigen Bauteile eines erfindungsgemäßen beleuchtbaren Zeigerinstrumentes 10 dargestellt; auf die Darstellung der Bauteile, die nicht zum Verständnis der Erfindung beitragen (z. B. Gehäuse, Frontscheibe, Halterungen u. ä.), wurde verzichtet. Dieses Zeigerinstrument 10 hat eine lichtleitende Platte 11, auf deren Oberseite 12 eine Skala 13 mit Ziffern 14 angeordnet ist. Die Skala 13 besteht bekannterweise aus einer geeigneten Folie oder aus einer oder mehreren aufgedruckten Schichten; anstelle der Ziffern 14 können auch Bereiche, Symbole o. ä. auf der Skala 13 vorgesehen sein. Diese in der Skala 13 befindlichen Ziffern 14 sind lichtdurchlässig. Im Zentralbereich 15 der lichtleitenden Platte 11 ist eine Durchgangsbohrung 16 eingearbeitet, die zur reibungsfreien Durchführung der Meßwerkswelle 17 eines Meßwerkes 18 dient, welches an der Unterseite 19 der lichtleitenden Platte 11 angeordnet ist. Der freie Endabschnitt der Meßwerkswelle 17 ragt aus der Oberseite 12 der lichtleitenden Platte 11 und aus der Skala 13 heraus und trägt einen Zeiger 20, der ebenfalls aus lichtleitendem Material besteht (z. B. Plexiglas). Der freie Endabschnitt der Meßwerkswelle 17 ist in der Nabe 21 des Zeigers 20 festgelegt, wobei sie die zur Skala 13 gerichtete Lichteintrittsfläche 22 durchstößt. Die mit der Zeigernabe 21 einstückig verbundene Zeigerfahne 23 erstreckt sich von der Nabe 21 aus im wesentlichen rechtwinklig zur Meßwerkswelle 17. Auf der der Zeigerfahne 23 entgegengesetzten Seite der Zeigernabe 21 ist an die Zeigernabe 21 eine zur Betrachterseite weisende Schräge 24 mit angeformt, die in noch zu beschreibender, jedoch bekannter Weise als lichtreflektierende Fläche dient. Der Zeiger 20 mit seiner Fahne 23 dreht sich über der Skala 13 entsprechend den dem Meßwerk 18 zugeführten Meßsignalen.

An der Außenumfangsfläche 25 der lichtleitenden Platte 11 ist mindestens eine erste Lichtquelle 26 angeordnet, deren Licht durch die lichtleitende Platte 11 flutet und Licht durch lichtdurchlässige Bereiche, wie z. B. die Ziffern 14 in Richtung des Zeigers 20 hindurchläßt. Auch der der Lichteintrittsfläche 22 des Zeigers 20 zugewendete Mittelbereich 27 der Skala 13 ist lichtdurchlässig.

Auf der Unterseite 19 der lichtleitenden Platte 11 ist ein rippenartiges Element 28 mit angeformt, das wie die lichtleitende Platte 11 aus lichtleitendem Material besteht. Dieses rippenartige Element 28 erstreckt sich von seinem einen, in der Nähe der Außenumfangsfläche 25 gelegenen Ende 29 im wesentlichen in Richtung auf die Durchgangsbohrung 16 in der lichtleitenden Platte 11, verjüngt sich jedoch dabei an seiner Unterseite 30 in Richtung auf die Unterseite 19 der lichtleitenden Platte 11. Diese Unterseite 30 des lichtleitenden Elementes 28 erreicht im Punkt X die Höhe der Unterseite 19 der lichtleitenden Platte 11 und ermöglicht demzufolge eine Anordnung des Meßwerks 18 bis zu diesem Punkt X; das Meßwerk 18 kann folglich bis an die Unterseite 19 der lichtleitenden Platte 11 herangebracht werden und benötigt damit nur eine recht kurze, durch die lichtleitende Platte 11 und die Skala 13 bis in die Zeigernabe 21 führende Meßwerkswelle 17; eine derart kurze Meßwerkswelle 17 wird beim Bremsen bzw. Beschleunigen eines mit einem solchen Zeigerinstrument versehenen Kraftfahrzeugs aufgrund des durch die Zeigerfahne 23 erzeugten Biegemomentes nicht so stark mechanisch beansprucht, wie es bei einem Meßwerk 18 mit längerer Meßwerkswelle 17 der Fall wäre; derartige auf die Meßwerkswelle 17 wirkende Biegemomente können zum Verbiegen der Meßwerkswelle 17 führen, Fehlanzeigen verursachen oder sogar auch zum Ausfall des Zeigerinstrumentes 10 führen. In Verlängerung des rippenartigen Elementes 28 ist dann eine Außenfläche 31 angeformt, die sich von der Höhe der Unterseite 19 der lichtleitenden Platte 11 in Richtung der Oberseite 12 der lichtleitenden Platte 11 neigt und als lichtreflektierende Fläche wirkt.

Beiderseits des rippenartigen Elementes 28 ist in die lichtleitende Platte 11 von ihrer Unterseite 19 aus je eine Nut 32 mit eingeformt, die jeweils in bevorzugter Weise bündig mit den Seitenflächen 33 verlaufen und deren Nutengrund 34 sich nahe der Oberseite 12 der lichtleitenden Platte 11 befindet; der Nutengrund 34 kann auch abschnittsweise ganz von der jeweiligen Nute 32 durchbrochen sein. An dem der Außenumfangsfläche 25 der lichtleitenden Platte 11 naheliegendem Ende 29 des rippenartigen Elementes 28 ist eine zweite Lichtquelle 35 angeordnet, deren Licht in radialer Richtung durch das rippenartige Element 28 flutet und bis zur Außenfläche 31 gelangt, von der es dann zur Lichteintrittsfläche 22 des Zeigers 20 gelenkt wird, von welcher es anschließend mittels der Schräge 24 an der Zeigernabe 21 in die Zeigerfahne 23 weitergeleitet wird und somit die Zeigerfahne 23 gut sichtbar beleuchtet. Das Ende 29 des rippenartigen Elementes 28 ist zwecks guter Lichtführung kreisbogenförmig, sphärisch oder bevorzugt hyperboloidähnlich gestaltet. Die zweite Lichtquelle 35 kann in ihrer Helligkeit unabhängig von der die lichtleitende Platte 11 mit Licht versorgenden ersten Lichtquelle 26 eingestellt werden, so daß das vom Betrachter sichtbare Zeigerinstrument bezüglich der Helligkeit individuell einstellbar ist.

In der Figur 4 der Zeichnung ist eine zweite Ausführungsform einer lichtleitenden Platte 11' dargestellt, die sich von der lichtleitenden Platte 11 gemäß der Figuren 1, 2 und 3 dadurch unterscheidet, daß an ihrer Unterseite 19' nicht nur ein einziges rippenartiges Element 28 angeformt ist, sondern eine Elementgruppe 36; diese Elementgruppe 36 setzt sich im vorliegenden Falle aus zwei rippenartigen Elementen 28' zusammen, die im wesentlichen parallel zueinander verlaufen und an jeder ihrer Seitenflächen 33' in einer Nut 32' bzw. in einer gemeinsamen Zwischennut 32'' in der lichtleitenden Platte 11 münden.

Jedes der rippenartigen Elemente 28' erstreckt sich zumeist aus der Nähe der Außenumfangsfläche 25' der lichtleitenden Platte 11' bis nahe an die zugehörige Durchgangsbohrung 16' und endet in einer lichtreflektierenden Außenfläche 31'.

Bevorzugterweise werden zwei oder drei, es können aber auch noch mehr rippenartige Elemente 28' eine derartige Elementgruppe 36 bilden. Die lichtreflektierenden Außenflächen 31' solcher rippenartiger Elemente 28' müssen dabei nicht in einer einzigen Ebene liegen, sie können zur zweckmäßigen Lichtführung von Fall zu Fall auch etwas untereinander versetzt sein.

Es ist darüberhinaus auch möglich, daß dem in den Figuren 1 bis 3 beschriebenem rippenartigen Element 28 oder auch der in Figur 4 beschriebenen Elementgruppe 36 zusätzlich noch ein weiteres rippenartiges Element (nicht dargestellt) bzw. eine zusätzliche Elementgruppe 36 (nicht dargestellt) mit dieser Funktion auf der Unterseite 19' der lichtleitenden Platte 11' gegenübersteht; die sich gegenüberstehenden rippenartigen Elemente müssen sich dabei aber nicht radial genau gegenüberstehen, sie können von dieser Linie auch etwas abweichen.

Zeigerinstrumente 10 mit der erfindungsgemäßen Gestaltung erlauben die erwünschte Verwendung von Meßwerken 18 mit kurzer Meßwelle 17.

Bei Anordnung von mehreren parallel zueinander verlaufenden Rippenelementen 28' sind diese rippenartigen Elemente 28' in bevorzugter Weise schmaler ausgebildet als ein einzelnes rippenartiges Element 28 gemäß dem in den Figuren 1, 2 und 3 dargestellten Ausführungsbeispiel.

## Patentansprüche

1. Beleuchtbares Zeigerinstrument (10) mit einer lichtleitenden Platte (11), die auf ihrer dem Betrachter zugewendeten Oberseite (12) eine Skala (13) trägt, eine Durchgangsbohrung (16) für die reibungsfreie Durchführung einer Meßwerkswelle (17) aufweist, wobei das Meßwerk (18) auf der dem Betrachter abgewendeten Unterseite (19) der lichtleitenden Platte (11) angeordnet ist und der Zeiger (20) des Zeigerinstrumentes (10) auf dem freien, durch die Durchgangsbohrung (16) der lichtleitenden Platte (11) führenden Endabschnitt der Meßwerkswelle (17) befestigt ist, wobei außerdem der mit der Meßwerkswelle (17) über der Skala (13) drehbare Zeiger (20) ebenfalls aus lichtleitendem Material besteht, im Bereich seiner Nabe (21) eine zur lichtleitenden Platte (11) weisende, reflektierende Schräge (24) aufweist, die durch die Lichteintrittsfläche (22) eintretendes Licht in Richtung der Zeigerfahne (23) umlenkt, und mit einem an der Unterseite (19) der lichtleitenden Platte (11) angeordneten rippenartigen Element (28), das auch aus lichtleitendem Material besteht, mit seinem Ende (29) in der Nähe der Außenumfangsfläche (25) der lichtleitenden Platte (11) liegt und mit seinem anderen Endabschnitt zum nicht von der Skala (13) belegten Zentralbereich (15) der lichtleitenden Platte (11) führt, wobei dieser Endabschnitt eine abgeschrägte, zur Skala (13) geneigte Außenfläche (31) besitzt, die das rippenartige Element (28) durchflutendes Licht zur Lichteintrittsfläche (22) des Zeigers (20) umlenkt, und mit zwei Lichtquellen (26, 35), von denen das Licht der ersten Lichtquelle (26) die lichtleitende Platte (11) von ihrer Außenumfangsfläche (25) her durchflutet und das Licht der zweiten Lichtquelle (35) vom in der Nähe der Außenumfangsfläche (25) der lichtleitenden Platte (11) gelegenen Ende (29) in Richtung auf die abgeschrägte Außenfläche (31) des rippenartigen Elementes (28), her das rippenförmige Element (28) durchflutet, dadurch gekennzeichnet, daß die von der lichtleitenden Platte (11) wegweisende Unterseite (30) des rippenartigen Elementes (28) sich von dem in der Nähe der Außenumfangsfläche (25) der lichtleitenden Platte (11) gelegenen Ende (29) in Richtung auf die abgeschrägte Außenfläche (31) des rippenartigen Elementes (28) hin verjüngend zuläuft, und daß in der lichtleitenden Platte (11) beiderseits des rippenartigen Elementes (28) je eine Nut (32) vorhanden ist, die längs des rippenartigen Elementes (28) verläuft.

2. Beleuchtbares Zeigerinstrument nach Anspruch 1, dadurch gekennzeichnet, daß die in der lichtleitenden Platte (11) vorhandenen Nuten (32) mit den Seitenflächen (33) des rippenartigen Elementes (28) fluchten.

3. Beleuchtbares Zeigerinstrument nach einem der Ansprüche 1 oder 2, dadurch gekennzeichnet, daß die Nuten (32) die lichtleitende Platte (11) nicht oder nur abschnittsweise durchdringen.

4. Beleuchtbares Zeigerinstrument nach einem der Ansprüche 1, 2 oder 3, dadurch gekennzeichnet, daß mehr als ein rippenartiges Element (28') auf der Unterseite (19') der lichtleitenden Platte (11') als Elementgruppe (36) vorhanden sind, wobei diese rippenartigen Elemente (28') jeweils durch Nuten (32', 32") voneinander getrennt sind und bevorzugt schmaler sind als bei Verwendung eines einzelnen rippenartigen Elementes (28).

5. Beleuchtbares Zeigerinstrument nach Anspruch 4, dadurch gekennzeichnet, daß zwei oder drei rippenartige Elemente (28') als Elementgruppe (36) nebeneinander herlaufen.

6. Beleuchtbares Zeigerinstrument nach einem der vorstehenden Ansprüche 1 bis 5, dadurch gekennzeichnet, daß die Unterseite (30, 30') der rippenartigen Elemente (28, 28') bereits vor (X) ihrer geneigten Außenfläche (31, 31') die Höhe der Unterseite (19, 19') der lichtleitenden Platte (11, 11') erreichen und diese Höhe bis zur jeweiligen geneigten Außenfläche (31, 31') der rippenartigen Elemente (28, 28') beibehalten.

## Claims

1. Illuminable pointer instrument (10) having a light-conducting plate (11) which, on its upper side (12) facing the observer, bears a scale (13), and has a through hole (16) for a measuring mechanism shaft (17) to pass through without friction, the measuring mechanism (18) being mounted on the underside (19), facing away from the observer, of the light-conducting plate (11) and the pointer (20) of the pointer instrument (10) being fastened on the free end portion, leading through the through hole (16) in the light-conducting plate (11), of the measuring mechanism shaft (17), the pointer (20), which can be rotated over the scale (13) using the measuring mechanism shaft (17), also consisting of light-conducting material, having in the region of its hub (21) a reflective bevel (24) that points towards the light-conducting plate (11) and deflects light entering through the light entry surface (22) in the direction of the pointer flag (23), and having a rib-like element (28) which is arranged on the underside (19) of the light-conducting plate (11), also consists of light-conducting material, is located with its end (29) in the vicinity of the outer peripheral surface (25) of the light-conducting plate (11) and, with its other end portion, leads to the central region (15), not occupied by the scale (13), of the light-conducting plate (11), this end portion having a bevelled outer surface (31) that is inclined with respect to the scale (13) and which deflects the light flooding through the rib-like element (28) towards the light entry surface (22) of the pointer (20), and having two light sources (26, 35) from which the light of the first light source (26) floods through the light-conducting plate (11) from its outer peripheral surface (25) and the light of the second light source (35) floods through the rib-like element (28) from that end (29) which is placed close to the outer peripheral surface (25) of the light-conducting plate (11) in the direction of the bevelled outer surface (31) of the rib-like element (28), characterized in that the underside (30), pointing away from the light-conducting plate (11), of the rib-like element (28) runs in a tapering manner from that end (29) which is placed close to the outer peripheral surface (25) of the light-conducting plate (11) in the direction of the bevelled outer surface (31) of the rib-like element (28), and in that in the light-conducting plate (11), on both sides of the rib-like element (28), there is a groove (32) which runs along the rib-like element (28).

2. Illuminable pointer instrument according to Claim 1, characterized in that the grooves (32) present in the light-conducting plate (11) align with the lateral surfaces (33) of the rib-like element (28).

3. Illuminable pointer instrument according to one of Claims 1 or 2, characterized in that the grooves (32) do not penetrate the light-conducting plate (11) or penetrate it only in sections.

4. Illuminable pointer instrument according to one of Claims 1, 2 or 3, characterized in that there is more than one rib-like element (28') on the underside (19') of the light-conducting plate (11'), as an element group (36), these rib-like elements (28') in each case being separated from one another by grooves (32', 32'') and preferably being narrower than when a single rib-like element (28) is used.

5. Illuminable pointer instrument according to Claim 4, characterized in that two or three rib-like elements (28') run alongside one another as an element group (36).

6. Illuminable pointer instrument according to one of the preceding Claims 1 to 5, characterized in that the underside (30, 30') of the rib-like elements (28, 28') already reach the level of the underside (19, 19') of the light-conducting plate (11, 11') before (X) their inclined outer surface (31, 31'), and maintain this level as far as the respective inclined outer surface (31, 31') of the rib-like elements (28, 28').

## Revendications

1. Instrument à aiguille éclairable (10), comprenant une plaque qui conduit la lumière (11) et porte un cadran (13) sur sa face supérieure tournée vers l'observateur, un perçage de passage (16) pour le passage sans frottement d'un axe de système de mesure (17), le système de mesure (18) étant disposé sur la face inférieure (19) de la plaque qui conduit la lumière (11), qui est située à l'opposé de l'observateur, et l'aiguille (20) de l'instrument à aiguille (10) étant fixé sur la section terminale libre de l'axe de système de mesure (17), qui passe à travers le perçage de passage (16) de la plaque qui conduit la lumière (11), alors qu'en outre l'aiguille (20), qui peut tourner avec l'axe (17) du système de mesure sur le cadran (13), est aussi réalisée en une matière qui conduit la lumière, qu'elle présente dans la zone de son moyeu (21) un biseau réfléchissant (24) tourné vers la plaque qui conduit la lumière (11), qu'elle dévie la lumière qui entre à travers la surface d'entrée de lumière (22) en direction de l'index de l'aiguille (23) et que, par un élément en forme de nervure (28) disposé sur la face inférieure (19) de la plaque qui conduit la lumière (11), élément (28) qui est aussi en une matière qui conduit la lumière, elle se trouve par son extrémité (29) à proximité du pourtour extérieur(25) de la plaque qui conduit la lumière (11) et conduit, par son autre section terminale, à la zone centrale (15) de la plaque qui conduit la lumière (11) non garnie du cadran (13), cette section terminale possédant une face extérieure biseautée, inclinée vers le cadran (13), qui dévie la lumière passant à travers l'élément en forme de nervure (28) en direction de la face d'entrée de la lumière (22) de l'aiguille (20), et comprenant deux sources de lumière (26, 35) dont la lumière de la première source de lumière (26) passe à travers la plaque qui conduit la lumière (11) à partir de son pourtour extérieur (25) tandis que la lumière de la seconde source de lumière (35) passe à travers l'élément en forme de nervure (28) à partir de l'extrémité (29) située à proximité du pourtour extérieur (25) de la plaque qui conduit la lumière (11), en direction de la face extérieure biseautée (31) de l'élément en forme de nervure (28),
caractérisé en ce que
la face inférieure (30) de l'élément en forme de nervure (28), qui s'écarte de la plaque qui conduit la lumière (11), s'avance en se rétrécissant à partir de l'extrémité (29), située à proximité du pourtour extérieur (25) de la plaque qui conduit la lumière (11), en direction de la face extérieure biseautée(31) de l'élément en forme de nervure (28), et
dans la plaque qui conduit la lumière (11), il y a, des deux côtés de l'élément en forme de nervure (28), respectivement une rainure (32) qui s'étend le long de l'élément en forme de nervure (28).

2. Instrument à aiguille éclairable selon la revendication 1,
caractérisé en ce que
les rainures (32) qui existent dans la plaque qui conduit la lumière (11) viennent en coïncidence avec les faces latérales (33) de l'élément en forme de nervure (28).

3. Instrument à aiguille éclairable selon l'une des revendications 1 ou 2,
caractérisé en ce que
les rainures (32) ne passent pas à travers la plaque qui conduit la lumière (11) ou ne passent que de façon fragmentaire.

4. Instrument à aiguille éclairable selon l'une des revendications 1, 2 ou 3,
caractérisé en ce qu'
il y a plus d'un élément en forme de nervure (28') sur la face inférieure (19') de la plaque qui conduit la lumière (11'), en tant que groupe d'éléments (36), ces éléments en forme de nervure (28') étant respectivement séparés les uns des autres par des rainures (32', 32"), et de préférence étant plus étroits que dans le cas de l'utilisation d'un seul élément en forme de nervure (28).

5. Instrument à aiguille éclairable selon la revendication 4,
caractérisé en ce que
deux ou trois éléments en forme de nervure (28') s'étendent à côté les uns des autres en tant que groupe d'éléments (36).

6. Instrument à aiguille éclairable selon l'une des revendications précédentes 1 à 5,
caractérisé en ce que
la face inférieure (30, 30')des éléments en forme de nervure (28, 28')atteint dès avant le point (X) de leur surface inclinée extérieure (31, 31'), la hauteur de la face inférieure (19, 19') de la plaque qui conduit la lumière (11, 11'), et conserve cette hauteur jusqu'à la face extérieure respectivement inclinée (31, 31') des éléments en forme de nervure (28, 28').
